# EUROPÄISCHE PATENTANMELDUNG

(11) **EP 0 978 497 A2**
(43) Veröffentlichungstag der Anmeldung: **09.02.2000**
(21) Anmeldenummer: 99890262.1
(22) Anmeldetag: 05.08.1999
(51) Int. Cl.: C05F 17/02, B09B 1/00, B01F 3/06

(54) **Belüftungs- und/oder Filterboden**

(30) Priorität: 06.08.1998 AT 136498
(71) Anmelder: TECHNISCHES BÜRO ING. REINHARD GÖSCHL, 2824 Seebenstein (AT)
(72) Erfinder: Göschl, Reinhard Ing., 2824 Seebenstein (AT)
(74) Vertreter: Itze, Peter, Dipl.-Ing.

(57) **Zusammenfassung**

Die Erfindung betrifft einen Belüftungs- und/oder Filterboden, insbesondere für Kompostmieten, in welchen Öffnungen zum Einblasen von Luft und zum Abführen von Flüssigkeit vorgesehen sind, wobei der Mietenboden durch an sich bekannte Hohldielendeckenelemente (1) gebildet ist, in welche von der Bodenoberseite her in die Kanäle (3) der Hohldielendeckenelemente (1) reichende Öffnungen (4) eingebracht sind, wobei die Kanäle (3) mit einer Luftzuführung (11) und/oder Sickerwasserableitung () verbunden sind.

## Beschreibung

Die Erfindung bezieht sich auf einen Belüftungs- und/oder Filterboden, insbesondere für Kompostmieten, in welchem Öffnungen zum Einblasen von Luft und zum Abführen von Flüssigkeit vorgesehen sind.

Üblicherweise werden organische Abfälle aus Hausmüll, Gewerbe- und Industriemüll, Tierhaltung, Grünabfälle oder Klärschlamm, in verschiedenen Mieten, wie Dreiecksmiete, Tafelmiete, Boxenmiete od.dgl. aufgeschichtet und durch Zugabe von Wasser und durch die Zufuhr von Luft bei mehr oder weniger teilweise automatisierter Umsetzung der Mieten kompostiert. Dabei werden die organischen Bestandteile abgebaut und in teilweise organische Bodenverbesserer bzw. Bodensubstrate umgewandelt. Der Abbau muß dabei in aerober Atmosphäre erfolgen, d.h. daß der Zutritt von Luft zu allen Bestandteilen der Miete ständig gewährleistet sein muß.

Die Luftzufuhr erfolgt dabei entweder durch Eindrücken von Luft in den Mietenboden oder durch Absaugen der Luft aus dem Bereich des Mietenbodens. Es sind auch wechselseitige Verfahren (Saugen, Drücken) bekannt, u.zw. z.B. aus AT 390 436 B.

Die gesicherte Zufuhr bzw. der gesicherte Abtransport von Luft zu bzw. vom Mietenboden ist eine der wichtigsten Aufgaben zum erfolgreichen Betrieb einer Kompostieranlage. Dabei stellt die Verschmutzung der Lufteinblas- bzw. Luftabsaugöffnungen ein fundamentales Problem dar, das durch verschiedenste Konstruktionen so klein wie möglich gehalten werden soll. Überdies soll das System auch den zuverlässigen Abtransport des anfallenden Sickerwassers ermöglichen. Diesbezüglich wurden viele Varianten erprobt und veröffentlicht, wobei bei den meisten Ausführungsformen Schlitzkonstruktionen des Bodens gewählt sind, in der verschiedene Filtermedien eine Vergleichmäßigung des Luftaustrittes erlauben und eine Verhinderung des Eindringens von Schmutzpartikel gewährleisten sollen. So ist z.B. in DE 25 20 640 C und DE 29 33 565 A eine Rotteplatte beschrieben, die über Schlitze die Belüftung zuläßt.

Eine andere Möglichkeit der Ausbildung des Belüftungs- und/oder Filterbodens ist durch diverse Formsteine gegeben, die so aufgelegt werden, daß zwischen den Steinen Lüftungsschlitze verbleiben, die die Zufuhr und den Abtransport der Luft und gegebenenfalls des Sickerwassers ermöglichen.

Die bekannten Ausbildungen arbeiten mehr oder weniger zufriedenstellend, haben jedoch den schwerwiegenden Nachteil, daß die Herstellung kostenintensiv ist und meist Vorarbeiten und lange Montagezeiten benötigt werden.

Der Erfindung liegt die Aufgabe zugrunde, eine Ausbildung der eingangs genannten Art zu schaffen, welche leicht und einfach zu errichten ist und zudem eine gleichmäßige Luftverteilung bzw. einen sicheren Sickerwasserabtransport ermöglicht.

Erfindungsgemäß wird diese Aufgabe dadurch gelöst, daß der Mietenboden durch an sich bekannte Hohldielendeckenelemente gebildet ist, in welche von der Bodenoberseite her in die Kanäle der Hohldielendeckenelemente reichende Öffnungen eingebracht sind, wobei die Kanäle mit einer Luftzuführung und/oder Sickerwasserableitung verbunden sind. Dadurch wird erreicht, daß durch bloßes Auflegen an sich bekannter Hohldielendeckenelemente bereits ein kompletter selbsttragender Boden erzielt ist, wobei durch die im Hohldielendeckenelement vorhandenen Kanäle bereits Verteilungseinrichtungen für die einzubringende bzw. abzusaugende Luft vorhanden sind, welche gleichzeitig auch zum Sickerwasserabtransport dienen können. Es brauchen in diese an sich bekannten Hohldielendeckenelemente lediglich Öffnungen eingebracht zu werden, die bis in die Kanäle reichen, wodurch bei Einblasen von Luft in diese Kanäle bereits eine Verteilung über die gesamte Länge der Hohldielendeckenbauelemente erreicht ist.

Vorteilhafterweise können in die Öffnungen Filterelemente, vorzugsweise Filterkörbe, eingesetzt sein, wodurch erreicht wird, daß sich die Öffnungen durch das darauf lagernde, zu kompostierende Material nicht verlegen, sodaß Luft eingeblasen bzw. abgesaugt und Filterwasser abfließen kann.

In besonders vorteilhafter Weise können die Filterelemente mit Kies als Filtermaterial befüllt sein, was ermöglicht, daß durch die Wahl der Kiesgröße sowohl der freie Luftdurchgang als auch die Filterwirkung für das Sickerwasser gesteuert werden kann. Schließlich können die Kanäle untereinander verbunden sein, wobei die Kanäle an den Stirnseiten der Hohldielendeckenelemente mit abnehmbaren Deckeln verschlossen sind. Damit wird erreicht, daß aufgrund der Verbindung der einzelnen Kanäle im Hohldeckenbauelement in allen Kanälen der gleiche Druck herrscht, wobei zudem aufgrund der abnehmbaren Deckeln eine leichte Reinigung des gesamten Kanalsystems erreicht ist.

In der Zeichnung ist ein Ausführungsbeispiel des Erfindungsgegenstandes dargestellt.

Fig. 1 zeigt eine Draufsicht auf einen fertigen Mietenboden.

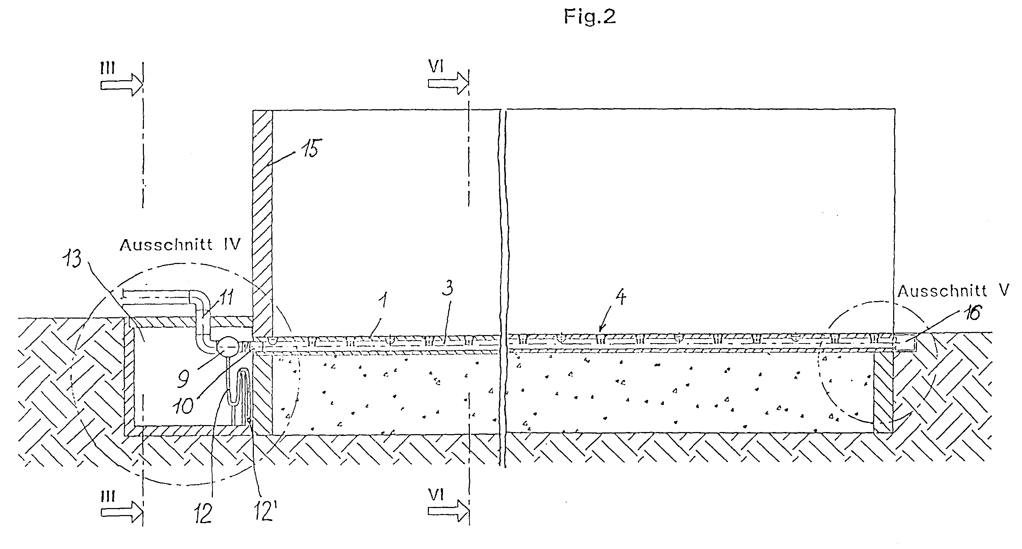

Fig. 2 ist ein Schnitt nach Linie II-II der Fig. 1.

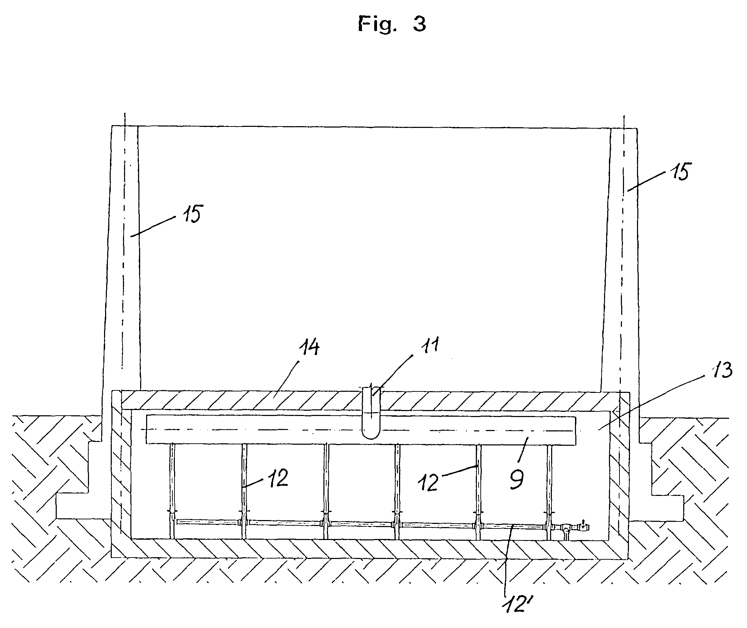

Fig. 3 veranschaulicht in größerem Maßstab einen Schnitt nach Linie III-III der Fig. 2.

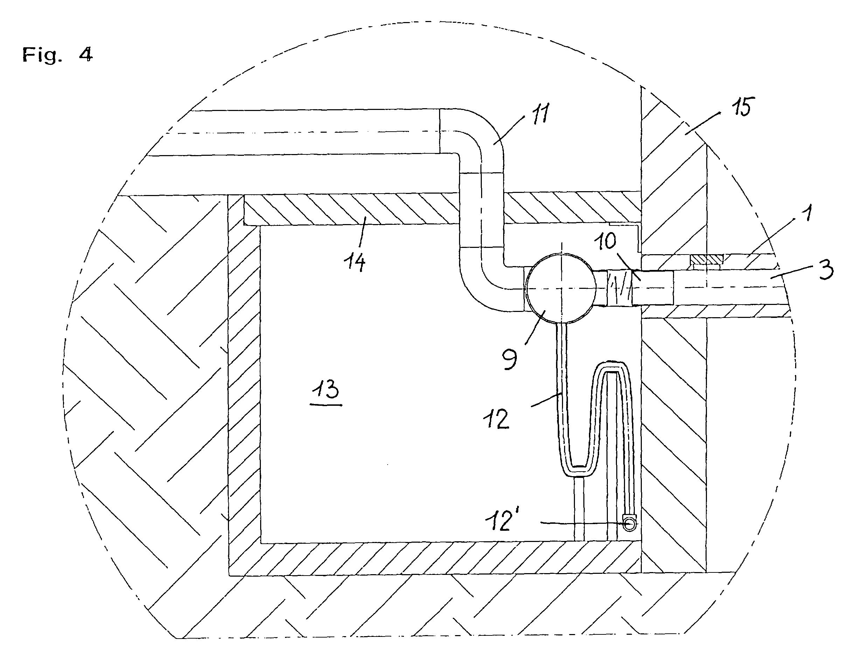

Fig. 4 gibt ebenfalls in größerem Maßstab einen Teilschnitt nach IV-IV der Fig. 2 wieder.

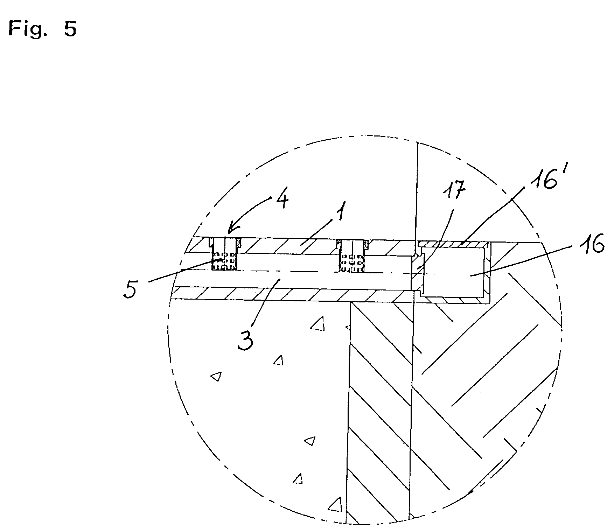

Fig. 5 zeigt auch in größerem Maßstab einen Teilschnitt nach Ausschnitt V der Fig. 2.

Fig. 6 zeigt wieder in größerem Maßstab einen Schnitt nach Linie VI-VI der Fig. 2, wobei ersichtlich ist, daß nicht in jeden der Kanäle des Hohldielendeckenelementes Öffnungen eingebracht sind.

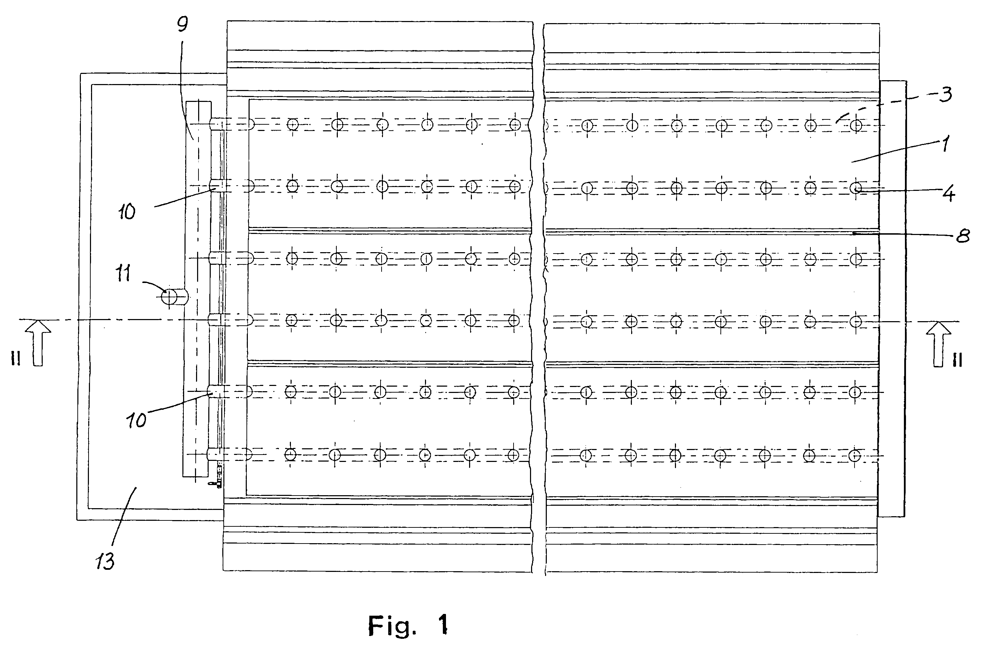

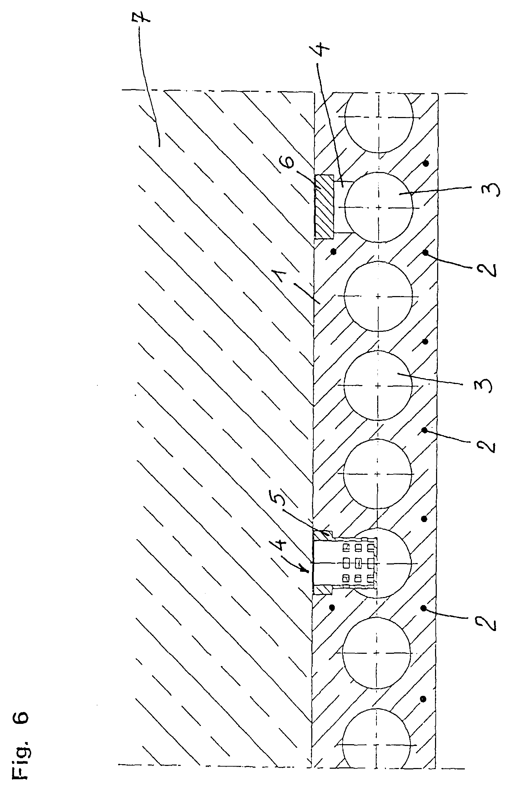

Mit 1 ist ein an sich bekanntes Hohldielendeckenelement bezeichnet, das an seiner Unterseite mit Armierungen 2 (Fig. 6) versehen ist und in Längsrichtung verlaufende Kanäle 3 aufweist, die das gesamte Hohldielendeckenelement 1 durchsetzen. In einige dieser Kanäle sind von oben her Öffnungen, vorzugsweise Bohrungen 4, eingebracht, die bis in die Kanäle 3 hineinreichen. In diese Öffnungen 4 sind Filterkörbe 5 eingesetzt, die mit Kies od.dgl. gefüllt sind. Für die Belüftung bzw. den Abtransport von Sickerwasser nicht unbedingt erforderliche Öffnungen 4 sind mit Blinddeckeln 6 (Fig. 6) abgedeckt. Auf diese Hohldielendeckenbauelemente 1 wird der zu kompostierende Abfall 7 (Fig. 6) aufgelegt. Die Hohldielendeckenelemente 1 sind parallel aneinanderstoßend verlegt, wobei die Trennfuge 8 (Fig. 1) mittels einer Dichtmasse wasserdicht versiegelt sind. An einer der Stirnseiten ist ein Verteilungskanal 9 vorgesehen, welcher über Verbindungsstutzen 10 in die Kanäle 3 des Hohldielendeckenelementes hineinreicht. An diesen Kanal 9 ist ein Rohrstutzen 11 angeschlossen, über welchen Luft zugeführt bzw. Luft abgeführt werden kann.

An der Unterseite dieses Verteilungskanals 9 sind mehrere Abwasserabführsyphone 12 angeschlossen, von welchem Sickerwasser über die Sickerwasserleitung 12' abgeführt werden kann. Der Verteilerkanal mit der Abfuhreinrichtung für das Sickerwasser ist in einem Putzschacht 13 angeordnet, welcher mittels eines Deckels 14 abschließbar ist. Mit 15 sind die Seitenwände der Miete bezeichnet.

An der anderen Stirnseite des Hohldielendeckenelementes ist ein weiterer Putzschacht 16 vorgesehen, der mittels einer Abdeckung 16' verschlossen ist. In diesen Putzschacht 16 münden die freien Enden der Hohldielendeckenelemente 1 ein, wobei die Ausgänge der Kanäle 3 dieser Hohldielendeckenelemente 1 mittels Deckeln 17 abgeschlossen sind. Diese Deckeln 17 sind abnehmbar, sodaß die Kanäle 3 zu Putzzwecken über den Putzschacht 16 zugänglich sind.

Anstelle der dargestellten Luftzufuhr über einen außenliegenden Verteilerkanal 9 können in nicht dargestellter Weise die Kanäle 3 der Hohldielendeckenelemente durch eine entsprechende, durch das gesamte Deckenelement hindurchgehende Querbohrung miteinander verbunden sein, über welche dann die Luftzu- bzw. -abfuhr und auch die Sickerwasserableitung erfolgen kann. In diesem Falle sind dann die Kanäle 3 an beiden Stirnseiten der Hohldielendeckenelemente mit abnehmbaren Deckeln 17 verschlossen.

## Patentansprüche

1. Belüftungs- und/oder Filterboden, insbesondere für Kompostmieten, in welchem Öffnungen zum Einblasen von Luft und zum Abführen von Flüssigkeit vorgesehen sind, dadurch gekennzeichnet, daß der Mietenboden durch an sich bekannte Hohldielendeckenelemente (1) gebildet ist, in welche von der Bodenoberseite her in die Kanäle (3) der Hohldielendeckenelemente (1) reichende Öffnungen (4) eingebracht sind, wobei die Kanäle (3) mit einer Luftzuführung (11) und/oder Sickerwasserableitung (12') verbunden sind.

2. Belüftungs- und/oder Filterboden nach Anspruch 1, dadurch gekennzeichnet, daß in die Öffnungen (4) Filterelemente (5), vorzugsweise Filterkörbe eingesetzt sind.

3. Belüftungs- und/oder Filterboden nach Anspruch 2, dadurch gekennzeichnet, daß die Filterelemente (5) mit Kies als Filtermaterial befüllt sind.

4. Belüftungs- und/oder Filterboden nach einem der Ansprüche 1 bis 3, dadurch gekennzeichnet, daß die Kanäle (3) untereinander verbunden sind, wobei die Kanäle (3) an wenigstens einer der Stirnseiten der Hohldielendeckenelemente (1) mit abnehmbaren Deckeln (17) verschlossen sind.
